Europäisches Patentamt

European Patent Office

Office européen des brevets

(11) Publication number: **0 114 660**
A2

(12) **EUROPEAN PATENT APPLICATION**

(21) Application number: 84100514.3

(22) Date of filing: 18.01.84

(51) Int. Cl.³: **F 16 L 47/00**
**F 16 L 55/18**

(30) Priority: 19.01.83 SE 8300252

(43) Date of publication of application:
01.08.84 Bulletin 84/31

(84) Designated Contracting States:
AT BE CH DE FR GB IT LI NL SE

(71) Applicant: **Aktieselskabet Dansk Rorindustri**
**Nymarksvej 37**
**DK-7000 Fredericia(DK)**

(72) Inventor: **Andersen, Kent**
**Dyrehegnet 24**
**DK-7100 Vejle(DK)**

(74) Representative: **Vossius Vossius Tauchner Heunemann**
**Rauh**
**Siebertstrasse 4 P.O. Box 86 07 67**
**D-8000 München 86(DE)**

(54) A method of joining two pre-insulated pipes, and a jointing sleeve for use in carrying out said method.

(57) In a method for joining two pre-insulated pipes (1, 2) by bridging the gap between their insulating jackets with a jointing sleeve (6) and injecting insulating material (4a), such as foam plastic, in the space between the protruding ends (not shown) of the inner, medium-carrying pipes, a jointing sleeve (6) of transparent material is used.

This makes it possible, without the use of special sensing equipment, such as ultrasonic sensing apparatus, to detect visually any faults (13) in the form of bubbles or voids that may occur in the insulating material (4a), and to repair such faults by drilling holes (14) through the jointing sleeve (6) into the faults (13) and filling the latter with insulating material through the holes.

Seals may be provided between the ends of the jointing sleeve (6) and the outside of the two pre-insulated pipes (1, 2) by using narrow sleeves or rings (7, 8) of shrinkable material, that are inserted over one or both pipes (1, 2) before welding them together, and shrunk in place extending beyond the ends of the jointing sleeve (6).

Fig.3

u.Z.: S 813 EP                                    January 18, 1984

Case: 319-17/TVR

Aktieselskabet Dansk Rørindustri
Fredericia,Denmark

1

# A METHOD OF JOINING TWO PRE-INSULATED PIPES, AND A JOINTING SLEEVE FOR USE IN CARRYING OUT SAID METHOD.

## TECHNICAL FIELD

The present invention relates to a method of joining two pre-insulated pipes of the kind comprising an inner medium-carrying pipe and an insulating jacket and, if present, an outer jacket, said method being of the kind comprising the following steps:

a) placing the two pipes end to end with their inner pipes abutting each other in readiness for welding or similar joining or bonding,

b) welding or similarly joining or bonding together the two abutting ends of the inner pipes,

c) placing a jointing sleeve on the outside of the pre-insulated pipes in a manner to bridge the gap between their insulating jackets and, if present, outer jackets to form a space of annular cross-sectional shape limited by the unjacketed ends of the inner pipes, the end surfaces of the insulating jackets, and the inside of the jointing sleeve,and

d) filling said space of annular cross-sectional shape with insulating material, such as by bringing a liquid or a mixture of liquids introduced into said space to form a foam filling the space and setting to a rigid mass.

## BACKGROUND ART

Such methods have been employed for a number of years for

0114660

joining pre-insulating pipes, especially for use in district heating systems, in which hot water from a central heating plant is circulated through insulated pipes buried in the ground.

Quite obviously, the quality and continuity of the insulating material formed by the filling step is of major importance in preventing undue heat losses from the buried conduits. For this reason, it has been common practice to inspect the joints by means of special sensing equipment, such as ultrasonic sensing equipment, in order to detect faults in the form of bubbles or voids in the insulating material introduced between the ends of the insulating material surrounding the two pre-insulated pipes having been joined.

The use of such special sensing equipment does, however, suffer from many disadvantages, such as costliness, complexity, inability to withstand rough handling and harsh weather, and - not least - the need for skilled personnel to operate the equipment and interpret the measurements or readings.

DISCLOSURE OF INVENTION

These disadvantages are avoided by the method according to the invention by the simple expedient,
e) that as the said jointing sleeve is used one made of a transparent material.

The use of transparent material for the jointing sleeve enables the personnel making the joint to see immediately any faults occurring during the step of introducing the insulating material, and in many cases voids can be removed before the insulating material has set by simply drilling a hole through the jointing sleeve into the void and extracting air or gas from it, such as by using a vacuum pump or simply a rubber suction ball to make the still fluent insulating material fill the space concerned.

The invention also relates to a jointing sleeve in the shape of a short pipe for use in carrying out the method of the invention, and this jointing sleeve differs from previously known jointing sleeves of this type in that at least that part of it, which in the finished joint will extend between the insulating jackets and, if present, outer jackets of the pipes, is made of a transparent material.

## BRIEF DESCRIPTION OF THE DRAWING

The invention is explained more in detail in the following and by reference to the purely diagrammatic drawings, in which

Figure 1 is a view showing the two pre-insulated pipes placed end to end preparatory to welding or the like,

Figure 2 shows the pipes after the welding step and after the jointing sleeve has been placed in its final position, but before the insulating material has been introduced in the space between the inner pipes and the jointing sleeve, and

Figure 3 shows the completed and insulated joint with one fault, and how the latter may be repaired.

## BEST MODE OF CARRYING OUT THE INVENTION

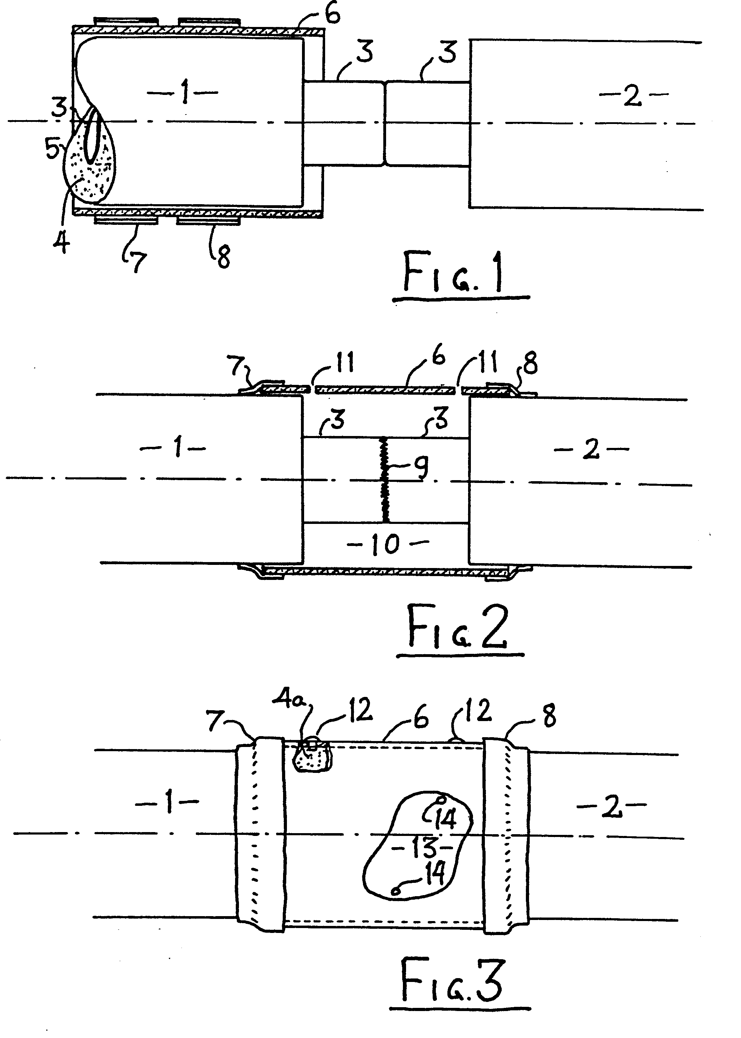

Figure 1 shows two lengths of pre-insulated pipe 1 and 2, each consisting of an inner pipe 3 of steel or the like and an insulating jacket 4 of suitable heat-insulating material, such as plastic foam. The insulating jacket 4 may be covered by an outer jacket 5 of more dense material to protect the insulating jacket 4.

In the process stage shown in Figure 1, the two pipes 1 and 2 are placed end to end preparatory to welding the two ends shown in the drawing together. Prior to placing the two pipes in the relative position shown, a jointing sleeve 6 and two shrinkable sealing sleeves 7 and 8 have been inserted over the end of the first pipe 1 in a manner to leave the mutually abutting ends accessible for welding or soldering. A fixture or jig (not shown) may be used to hold the two pipe ends in alignment for welding or soldering.

In the process stage shown in Figure 2, the welded seam 9 has been completed, any fixtures or jigs removed, and the jointing sleeve 6 pushed along the end of the first pipe 1 to cover the ends of the insulating jackets 4 - and of the outer jacket 5 if present - thus forming closed annular space 10 limited by the unjacketed ends of the inner pipes 3, the end surfaces of the insulating jackets 4, and the inside of the jointing sleeve 6. To provide a seal between the jointing sleeve 6 and the two pipes 1 and 2, the shrinkable sealing sleeves or rings 7 and 8 have been shrunk so as to cover the ends of the jointing sleeve 6 and the adjacent areas of the outer jacket 5. To make it possible to inject insulating material, preferably in the form of an unfoamed foamable plastic in liquid form, which foams and sets to a rigid mass/in the space 10, and to enable excess air and/or liquid to escape, suitable holes 11 are drilled in the jointing sleeve 6.

Figure 3 shows the situation after the injection and foaming of the insulating material, now forming an insulating jacket 4a around the ends of the inner pipes 3, the holes 11 now being plugged by means of plugs 12 for protection.

As explicitly described so far, the process explained with reference to the drawing does not differ in principle from known methods of joining two pre-insulated pipes. The novel aspect of the method according to the invention consists in that the jointing sleeve 6 - in contrast to previous jointing sleeves used for this purpose - is made of transparent material.

As a consequence of the use of transparent material for the jointing sleeve, a fault 13 in the form of a bubble or void, that would otherwise be invisible and only be detectable by means of costly ultrasonic sensing apparatus, is rendered immediately visible, provided - of course - that lighting and viewing conditions allow. The only equipment, if any, required to inspect the insulated joint will thus be a torch, and a mirror if the pipe joint is situated in a ditch or the like.

The immediate visibility of the fault 13 makes it possible to effect a repair by drilling additional holes 14, e.g. one at each end of the fault, and injecting additional insulating material until the fault is filled or - if the injected material has not yet had enough time to set - sucking the air or gas forming the void out through the holes to cause the surrounding mass to fill the void. Finally, the holes 14 are plugged by means of additional plugs (not shown) or sealed in any other manner suitable for the purpose.

The method of the invention and the use of the jointing sleeve of the invention are not limited to pipes of a circular cross section, as the invention can be applied with the same effect to pipes having e.g. a hexagonal, square or rectangular or any other suitable cross section. The jointing sleeve may be made from tubular stock, or fabricated from sheet material by bending and cementing or otherwise joining the edges made to overlap each other by the bending. Neither is the invention limited to the use of shrinkable sealing rings to provide a seal between the jointing sleeve and the outside surface of the pre-insulated pipes, as such a seal may be provided in many other ways, or it may be omitted altogether, using the gap between the sleeve and the outside surface of the pipes as an opening for air and surplus insulating material to escape instead of one or more of the holes 11.

The scope of the invention will be evident from the following claims.

CLAIMS:

1. A method of joining two pre-insulated pipes (1,2) of the kind comprising an inner medium-carrying pipe (3) and an insulating jacket (4) and, if present, an outer jacket (5), said method being of the kind comprising the following steps:

a) placing the two pipes (1,2) end to end with their inner pipes (3) abutting each other in readiness for welding or similar joining or bonding,

b) welding or similarly joining or bonding together the two abutting ends of the inner pipes (3),

c) placing a jointing sleeve (6) on the outside of the pre-insulated pipes (1,2) in a manner to bridge the gap between their insulating jackets (4) and, if present, outer jackets (5) to form a space (10) of annular cross-sectional shape limited by the unjacketed ends of the inner pipes (3), the end surfaces of the insulating jackets (4), and the inside of the jointing sleeve (6), and

d) filling said space (10) of annular cross-sectional shape with insulating material, such as by bringing a liquid or a mixture of liquids introduced into said space (10) to form a foam filling the space and setting to a rigid mass (4a),

CHARACTERISED IN

e) that as the said jointing sleeve (6) is used one made of a transparent material.

2. A method according to claim 1 and for use in the case that the filling step (step d in claim 1) has resulted in one or more faults (13) in the form of voids in the rigid mass (4a), characterised in that said void or voids is/are filled by holes (14) drilled through the jointing sleeve directly into each fault (13).

3. A jointing sleeve (6) in the shape of a short pipe for use in carrying out the method as claimed in claim 1 or claim 2, characterised in that at least that part of it, which in the finished joint will extend between the insulating jackets (4) and, if present, outer jackets (5) of the pipes (1,2), is made of a transparent material.

4. A jointing sleeve as claimed in claim 3, characterised in that it consists entirely of a transparent material.

0114660

Fig.1

Fig 2

Fig.3